# EUROPEAN PATENT SPECIFICATION

(11) **EP 3 910 902 B1**
(45) Date of publication and mention of the grant of the patent: **04.03.2026**
(21) Application number: 20737978.5
(22) Date of filing: 06.01.2020
(51) Int. Cl.: G07C 5/00, G07C 5/08

(54) **METHOD AND SYSTEM FOR COLLECTING AND MANAGING VEHICLE-GENERATED DATA**
VERFAHREN UND SYSTEM ZUM SAMMELN UND VERWALTEN VON FAHRZEUGGENERIERTEN DATEN
PROCÉDÉ ET SYSTÈME PERMETTANT DE COLLECTER ET DE GÉRER DES DONNÉES PRODUITES PAR DES VÉHICULES

(30) Priority: 09.01.2019 KR 20190002897
(43) Date of publication of application: 17.11.2021
(73) Proprietor: HYUNDAI MOTOR COMPANY, Seoul 06797 (KR); Kia Motors Corporation, Seoul 06797 (KR)
(72) Inventor: RYU, Jung Hei, Hwaseong-si Gyeonggi-do 18280 (KR); PARK, Seung Wook, Gyeonggi-do 16803 (KR); LIM, Wha Pyeong, Hwaseong-si Gyeonggi-do 18271 (KR)
(74) Representative: Hoffmann Eitle
(86) International application number: PCT/KR2020/000173
(87) International publication number: WO 2020/145589

(56) References cited:
- WO-A1-2015/100278
- DE-A1- 102014 005 589
- KR-A- 20160 100 350
- KR-A- 20180 044 368
- US-A1- 2007 255 704
- US-A1- 2007 255 704
- US-A1- 2016 147 945
- US-A1- 2016 295 401
- US-A1- 2017 010 614

## Description

### TECHNICAL FIELD

The present disclosure relates to a method and system for collecting and storing vehicle-generated data from a vehicle.

### BACKGROUND

With more vehicles being equipped with ADAS (Advanced Driver Assistance Systems) or autonomous driving functions, traffic accidents are increasingly attributed to vehicles rather than to drivers. For proper clarification of causes of an accident, there is a growing demand to collect data in addition to the data recorded by the existing Event Data Recorder (EDR), such as additional information regarding the operational status of ADAS or autonomous driving functions, the detailed determination by the vehicle system on the sensor input, etc.

Data generated, recorded, and stored in vehicles, including EDR data may be used for a variety of purposes, for example, vehicle-related services (insurance, maintenance, used car transactions, rental/sales, etc.) to marketing and research (traffic analysis, autonomous driving, etc.). For example, vehicle manufacturers, etc., seek to utilize vehicle data to verify and improve the functions of various ECUs, sensors, and other components equipped in the vehicle. Further, the insurance industry has introduced "Usage-Based Insurance" (UBI) to calculate insurance premiums that are suitable for risks due to a driver's driving propensity.

With the development of information and communication technology, such vehicle data may be collected in various forms by a data server on a network and provided to various service providers. Some information collected by the data server may be sensitive in terms of personal privacy. Because the operator typically has control and the ability to sell personal information contained in these data servers, individuals may incur risk such as potential exposure of sensitive personal information to unscrupulous third parties, data breaches, etc.

Moreover, as legislation on privacy protection, such as the European General Data Protection Regulation (GDPR), has been implemented, companies need to demonstrate responsibility and consequences for data protection by establishing a process of collecting, processing, updating, storing, and deleting personal data records.
WO 2015/100278 A1 relates to a method for monitoring component usage during vehicle service activities.
DE 10 2014 005589 A1 relates to a method for the anonymous transmission of motor vehicle-related data from a motor vehicle to a central computer and a corresponding computer program product.
US 2016/147945 A1 relates to methods and systems for performing secure checks of details of patient health records stored across multiple healthcare institutions without disclosing identifying details of the patient in transit and without compromising commercial confidentiality.
US 2007/255704 A1 relates to a method and system of de-identification of a record, the method including creating a vector of identification field values of a record, searching unstructured data of the record for each identification field value of the vector, and de-identifying the identification field values of the record.

### SUMMARY

The present invention is defined by the methods according to independent claim 1 and independent claim 4 and the data server according to independent claim 7. Preferred optional features are recited in the dependent claims. The present disclosure discloses a technique performed by a centralized system that collects and manages vehicle-generated data for managing the vehicle-generated data separately from personal information to offer privacy protection to individuals.

According to an aspect of the present disclosure, vehicle-generated data is anonymized into de-identified versions of the vehicle identification numbers (VINs) of associated vehicles by servers of vehicle manufacturers.

A de-identified version of a VIN facilitates statistical analysis of vehicle-generated data without threatening the privacy of each individual. Anonymized vehicle-generated data can be held in a neutral data server, which is administered by an operator independent of vehicle manufacturers, and provided to a third party.

By law or a court order or with the consent of vehicle owners or drivers, vehicle manufacturers can reconstruct de-identified versions of VINs to restore the relationships between anonymized vehicle-generated data, vehicles which generate the vehicle-generated data, and owners or drivers of the vehicles.

### BRIEF DESCRIPTION OF THE DRAWINGS

FIG. 1 is a schematic diagram of a centralized system for collecting and managing vehicle-generated data from vehicles according to at least one exemplary embodiment of the present disclosure.
FIG. 2 is a conceptual diagram showing an exemplary structure of relational databases administered by a vehicle manufacturer (VM) server in the system of FIG. 1 according to the exemplary embodiment.
FIG. 3 is a flowchart illustrating a process in which the VM server collects and stores event data recorder (EDR) data in the system of FIG. 1 according to the exemplary embodiment.
FIG. 4 is a diagram illustrating details of a vehicle identification number (VIN).
FIG. 5 is a flowchart illustrating a method in which the VM server provides event data to a neutral server in the system illustrated in FIG. 1.
FIG. 6 shows an exemplary version of event data transmitted to a neutral server.
FIG. 7 is an exemplary control flowchart of a process in which a vehicle owner acquires event data generated from his or her vehicle in the system illustrated in FIG. 1.
FIG. 8 is an exemplary control flowchart of a process in which a third party acquires event data generated from a specific vehicle that the third party is interested in in the system illustrated in FIG. 1.
FIG. 9 is a flowchart of a process in which the VM server acquires event data related to a specific vehicle from the neutral server in the system illustrated in FIG. 1.

### DETAILED DESCRIPTION

Some exemplary embodiments of the present disclosure are described below with reference to the accompanying drawings. In the following description, like reference numerals preferably designate like elements, although the elements are shown in different drawings. Further, in the following description of some embodiments, a detailed description of known functions and configurations incorporated herein will be omitted for the purpose of clarity and for brevity.

Additionally, various terms such as first, second, A, B, (a), (b), etc., are used solely for the purpose of differentiating one component from the other but not to imply or suggest the substances, the order or sequence of the components. Throughout this specification, when a part "includes" or "comprises" a component, the part is meant to further include other components, not excluding thereof unless there is a particular description contrary thereto. In addition, the terms such as "unit," "module," and the like refer to units for processing at least one function or operation, which may be implemented by hardware, software, or a combination thereof.

The present disclosure generally relates to a system for collecting and managing data (i.e., vehicle-generated data) generated, recorded, or stored in a vehicle from a plurality of vehicles. Vehicle-generated data is anonymized into a de-identified version of the vehicle identification number (VIN) of a relevant vehicle. The anonymized vehicle-generated data may be held in a neutral data server, which is administered by an operator independent of vehicle manufacturers, and provided to a third party. De-identified versions of VINs facilitate statistical analysis of vehicle-generated data without threatening the privacy of each individual. By law or a court order or with the consent of vehicle owners or drivers, vehicle manufacturers (VMs) may reconstruct de-identified versions of VINs to restore the relationships between anonymized vehicle-generated data, vehicles which generate the vehicle-generated data, and owners or drivers of the vehicles.

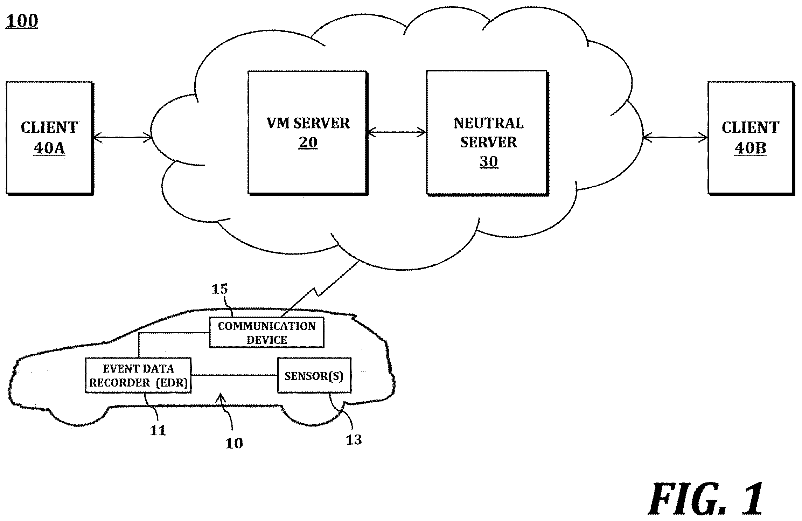

FIG. 1 is a schematic diagram illustrating a centralized system 100 for collecting and managing vehicle-generated data from vehicles according to at least one exemplary embodiment of the present disclosure.

The system 100 of FIG. 1 relates to vehicle-generated data illustrated as data recorded by an event data recorder (EDR) provided in a vehicle, although the system 100 as described below is also applicable to other types of data generated, recorded or stored by other types of in-vehicle devices in relation to a vehicle operation or driver behavior. For example, the system 100 of FIG. 1 may be configured to apply to autonomous driving data, e.g., time-stamped data of events such as state transition of ADAS (advanced driver assistance systems) functions, minimal risk maneuver (MRM) initiation, switching of control to the driver, and errors in the autonomous driving system, which is recorded by a recently discussed Data Storage System for Automated Driving Vehicles (DSSAD).

The system 100 may include an in-vehicle monitoring system 10 provided in a vehicle, a vehicle manufacturer (VM) server 20 operated by a vehicle manufacturer, and a data server 30 operated by an operator who is independent of vehicle manufacturers. Although FIG. 1 illustrates one vehicle and one VM server 20, there may be multiple vehicles and multiple VM servers 20 operating in different vehicle manufacturers. The data server 30 may be referred to as a "neutral server" in that it is operated by an operator who is independent of vehicle manufacturers.

The in-vehicle monitoring system 10 may be configured to generate, record, or store various types of data related to vehicle operation or driver behavior. For example, the in-vehicle monitoring system 10 may include an event data recorder (EDR) 11, at least one or more sensors 13, and a telecommunication device 15, which are connected to in-vehicle data buses, e.g., controller area network (CAN), local interconnect network (LIN), medium oriented systems transport (MOST), Ethernet, etc.

The EDR 11 may be configured to receive data from various sensors and/or electronic control units (ECUs) mounted on the vehicle. The EDR 11 has volatile memory that has data for a certain period temporarily stored while being continuously updated. The EDR 11 may be responsive to a detection of the occurrence of one or more predefined events for recording the data stored in the volatile memory within a predetermined time before and after the detection in the internal nonvolatile memory, and providing the recorded data to the telecommunication device 15. Such an event may in particular be a traffic collision. A traffic collision may be detected, for example, when triggering the deployment of an irreversible safety device such as an airbag or seat belt preloading device. A traffic collision may also be detected at the occurrence of acceleration/deceleration exceeding a predefined threshold (e.g., a speed change of 8 km/h or higher within about 150 ms). The predefined event(s) may further include a malfunction of the main function of the vehicle.

The event data recorder 11 may be configured to receive trigger signal(s) informing of the occurrence of an event from the electronic control unit(s), such as, for example, an airbag control unit (ACU). The event data recorder 11 may be accessible to values measured by at least one or more sensors 13. At least one sensor 13 may be configured to detect vehicle speed/acceleration/deceleration/travel distance, and the like.

The data recorded by the event data recorder 11 may be data suitable for analyzing traffic collisions, such as, for example, data of vehicle dynamics, driver's behavior, and an operating state of a vehicle safety system. The event data recorder 11 may be configured to transmit recorded data (hereinafter referred to as 'EDR data') to the telecommunication device 15.

A communication device 15 is a wired or wireless communication device which connects an internal network of a vehicle to an external communication network. The communication device 15 may be, for example, a telematics unit (TMU) or a wired or wireless dongle which is plugged into an on-board diagnostics (OBD)-II port. The communication device 15 may be configured to include a wireless transceiver capable of cellular communication, such as global system for mobile communication (GSM), wideband code division multiple access (WCDMA), long term evolution (LTE), and fifth generation (5G), and short-rage wireless communication such as wide local area network (WLAN), cellular vehicle-to-everything (c-V2X), wireless access in vehicle environments (WAVE), dedicated short range communications (DSRC), and Bluetooth.

The telecommunication device 15 may be configured to generate an event report message. The event report message may include event data (EDR data and additional information), a driver's pseudonymized identifier, and a vehicle pseudonymized identifier. The telecommunication device 15 may be configured to transmit the event report message to the neutral server 30 via the communication network. In addition, the telecommunication device 15 may be configured to transmit information necessary for generating pseudonymized identifiers ('SALT generation information' to be described below) to the VM server 20 and thus, the VM server 20 may be configured to directly generate pseudonymized identifiers later. Alternatively, the telecommunication device 15 may be configured to transmit the pseudonymized identifiers themselves to the VM server 20.

The communication device 15 may generate an event report message. The event report message includes vehicle identification information (VII) and event data (event data recorder (EDR) data and/or additional information). The communication device 15 may transmit the event report message to a VM server 20 via a communication network. The VII is information for uniquely identifying the corresponding vehicle and may typically be a VIN that is a 17-digit unique identifier (ID) which is allocated to each vehicle by a VM and includes numerals and letters. Alternatively, the VII may be vehicle license plate information or a unique ID used for communication by the communication device 15. As another example, personally identifiable information (PII) (e.g., a resident registration number or a driver's license number) for identifying an individual (i.e., a vehicle owner or driver) may be used instead of VII.

The VM server 20 may receive the event report message from the vehicle. The VM server 20 may separately store the VII and the event data in different databases. The VM server 20 may generate a de-identified version of the VII, in which elements enabling a third party to identify or track the vehicle are masked, by performing a de-identification process, which will be described below, on the VII. The VM server 20 may provide the event data and the de-identified version of the VII related to the event data (i.e., anonymized event data) to a neutral server 30. The VM server 20 may remove the event data provided to the neutral server 30 from the database.

When event data of a specific individual and/or a specific vehicle is required, the VM server 20 may specify VII of the specific vehicle which generates the event data by querying databases managed thereby and acquire event data corresponding to the specified VII. Alternatively, the VM server 20 may reconstruct a de-identified version of the VII of the specific vehicle from the VII and acquire event data corresponding to the reconstructed de-identified version from the neutral server 30. In other words, the VM server 20 may link anonymized event data held in the neutral server 30 back to a specific vehicle and/or a specific individual.

To protect individual privacy, only a vehicle owner or a person or agency permitted by the vehicle owner should be allowed to access event data in which a related individual or vehicle is identified unless other people are permitted by a court order, a search warrant, and/or other applicable laws and regulations.

The neutral server 30 may collect anonymized event data from VM servers of different VMs and provide the collected anonymized event data to third parties. The neutral server 30 enables researchers, insurance companies, governmental organizations, or other service providers who try to statistically analyze event data to access vehicle data of several brands through the single server instead of several VM servers of VMs.

A system 100 may further include client computing devices 40A and 40B which communicate with the VM server 20 or the neutral server 30 through an appropriate network connection. The client computing device 40A may be a computer system or a mobile phone used by a user or another appropriate computing device capable of communicating with the VM server 20, and the client computing device 40B may be a computer system or a server system used by a third party or another appropriate computing device capable of communicating with the VM server 20 or the neutral server 30. The user may acquire event data generated in his or her vehicle from the VM server 20 using the client computing device 40A, and a third party with authority may use the client computing device 40B to acquire event data of a specific individual and/or a specific vehicle from the VM server 20 or acquire anonymized event data which is useful for statistical analysis from the neutral server 30.

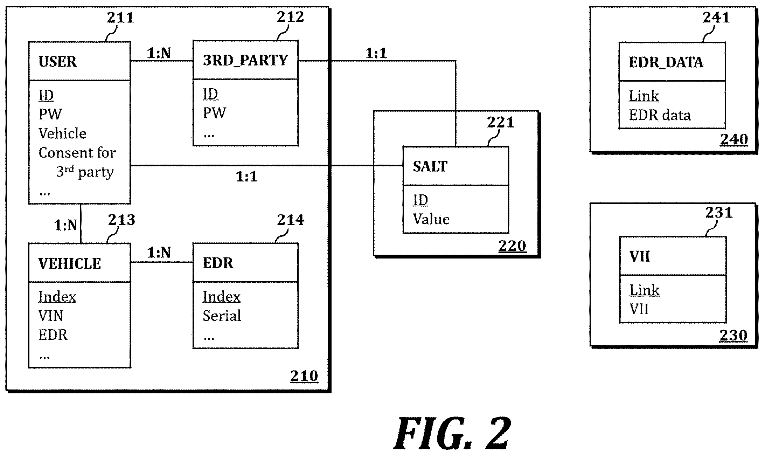

FIG. 2 is a conceptual diagram showing an exemplary structure of relational databases administered by the VM server 20 in the system of FIG. 1 according to an embodiment. Four databases are shown in FIG. 2.

A first database 210 includes a [USER] table 211 in which profiles of users are stored, a [3RD_PARTY] table 212 in which profiles of third parties that want to use event data are stored, a [VEHICLE] table 213 in which profiles of vehicles are stored, and an [EDR] table 214 in which profiles of EDR devices installed in vehicles are stored.

In the [USER] table 211, each user record may have fields such as ID, encoded password (PW), vehicle, consent for third party authorization, and the like. In the [3RD_PARTY] table 212, each third party record may have fields such as ID, encoded PW, and the like. An ID may be a primary key for distinguishing each user or third party record from other records. An encoded password PW is a hash value obtained by applying a hash function to the concatenation of a password of a user or a third party and a randomly generated value (hereinafter "salt"). In the [VEHICLE] table 213, each vehicle record may have fields such as index, VIN, EDR device, and the like. In the [EDR] table 214, each EDR record may have fields such as index, EDR device serial number, hardware or software version, and the like. In the [VEHICLE] table 213 and the [EDR] table 214, an index may be a primary key for distinguishing each record from other records.

A second database 220 includes a [SALT] table 221 in which the salt used in generating the encoded passwords (hash values) recorded in the [USER] table 211 and the [3RD_PARTY] table 212 is recorded. In the [SALT] table 221, each record has an ID of a relevant user or third party and a salt value. In the [SALT] table 221, the ID may be a primary key for distinguishing each record from other records. The salt is also used in generating a de-identified version of VII which will be described below.

Since the user may possess a plurality of vehicles, the [USER] table 211 and the [VEHICLE] table 213 may have a 1:N reference relationship. Also, since a plurality of third parties may want to access event data in which relevant vehicle and individual are identified, the [USER] table 211 and the [3RD_PARTY] table 212 may have a 1:N reference relationship. Since an EDR device may be changed several times during the lifespan of a vehicle, the [VEHICLE] table 213 and the [EDR] table 214 may have a 1:N reference relationship. The [USER] table 211 and the [3RD_PARTY] table 212 may have a 1:1 reference relationship with respect to the [SALT] table 221.

A third database 230 includes a [VII] table 231 in which VII is recorded. A fourth database 240 includes an [EDR_DATA] table 241 in which event data is recorded. Each record of the [VII] table 231 and each record of the [EDR_DATA] table 241 are referred to each other through link fields. In the [VII] table 231, VII or a de-identified version of the VII may be recorded.

Meanwhile, to manage anonymized event data, the neutral server 30 may have databases which are similar to the third database 230 and the fourth database 240 illustrated in FIG. 2.

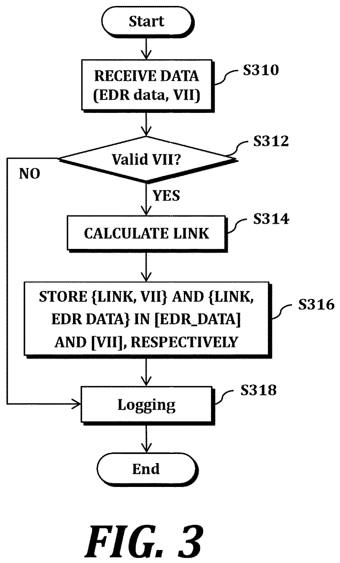

FIG. 3 is a flowchart illustrating a process in which the VM server 20 collects and stores EDR data in the system of FIG. 1 according to an embodiment.

The VM server 20 receives an event report message including EDR data and VII from a vehicle (S310).

The VM server 20 may determine whether the VII included in the event report message is valid (S312). For example, the VM server 20 may check whether the VII is that of a registered user's vehicle by querying the [USER] table 211 and/or the [VEHICLE] table 213 of the first database 210. When the VII is invalid ("NO" in S312), the EDR data is discarded, and log information is generated (S318).

When the VII is valid ("YES" in S312), the VM server 20 generates a link for linking the EDR data and the VII together which will be stored in the different databases 230 and 240 (S314). The VM server 20 records the VII together with a link in the [VII] table 231 of the third database 230, records the EDR data together with a link in the [EDR_DATA] table 241 of the fourth database 240 (S316), and then generates log information (S318).

As described above, in the neutral server 30, pieces of event data are distinguished from each other by de-identified versions of VII. According to the embodiment, a de-identified version of VII is introduced to allow meaningful statistical analysis on relevant event data while preventing a relevant vehicle from being identified or tracked. In a typical embodiment, VII may be a VIN that is a 17-digit unique ID which is allocated to each vehicle by a VM and includes numerals and letters. As described below, each digit of a VIN has a specific purpose.

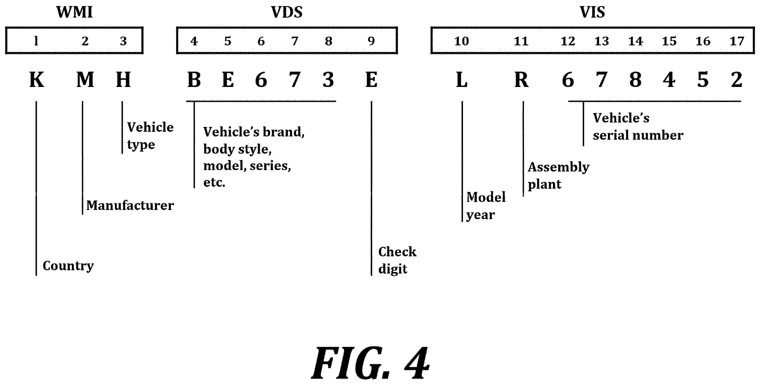

FIG. 4 is a diagram illustrating details of a VIN.

The first three digits of the VIN, which are known as a world manufacturer identifier (WMI) or a WMI code, provides information on a manufacturer of a vehicle and a geographical location.

The first digit of the VIN represents a country in which the vehicle is manufactured. This digit may be a letter or a numeral. For example, "1," "4," or "5" in the first digit represents the country of origin as America. "2" represents Canada, "3" represents Mexico, "6" represents Australia, "A" represents South Africa, "J" represents Japan, "L" represents China, and "K" represents Korea.

The second digit of the VIN represents a vehicle manufacturer but should be paired with the first digit (represents a manufacturing country) to accurately decode the manufacturer. For example, a VIN beginning with "1C" represents a vehicle manufactured by Chrysler in America, and a VIN beginning with "AC" represents a vehicle manufactured by Hyundai in South Africa.

The third digit represents a vehicle type or a manufacturing division. In a VIN beginning with "WV1," "W" represents Germany as a manufacturing country, and "V" represents Volkswagen as a manufacturer. "1" represents a commercial vehicle of Volkswagen. The VINs of Volkswagen buses or vans begin with "WV2," and the VINs of Volkswagen trucks begin with "WV3."

The fourth to ninth digits of the VIN are referred to as a vehicle descriptor section (VDS). The fourth to eighth digits represent vehicle features such as vehicle body style, an engine type, a model, and a series. Each manufacturer uses these five-digit fields in its own way.

The ninth digit is a check numeral for identifying an invalid VIN. This numeral is determined from numeric values of the first eight digits and the last eight digits according to a mathematical formula.

The tenth to seventeenth digits of the VIN are known as a vehicle identifier section (VIS). These provide a much more detailed description of the specific vehicle.

The tenth digit represents a model year of the vehicle. Letters from B to Y correspond to models between the years 1981 and 2000. VINs do not use I, O, Q, U, or Z. Between the years 2001 and 2009, numerals from 1 to 9 were used instead of letters. The English alphabet is used for the years 2010 to 2030 beginning with A. Model years of 2000 or later are as follows: Y=2000, 1=2001, 2=2002, 3=2003, 4=2004, 5=2005, 6=2006, 7=2007, 8=2008, 9=2009, A=2010, B=2011, C=2012, D=2013, E=2014, F=2015, G=2016, H=2017, J=2018, K=2019, and L=2020.

The eleventh digit represents an assembly plant in which the vehicle was assembled. Each VM has its own set of plant codes. The last six digits (from the twelfth digit to the seventeenth digit) represent a production serial number of the vehicle.

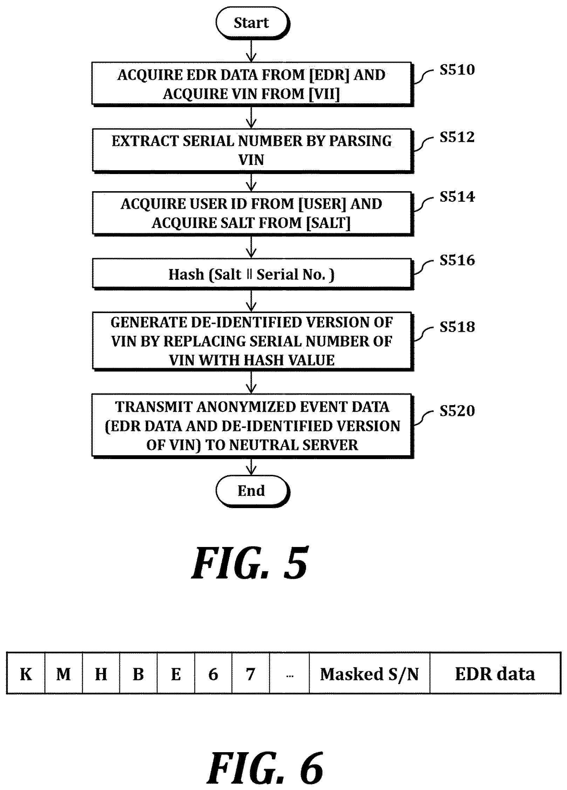

FIG. 5 is a flowchart illustrating a method in which the VM server 20 provides event data, which is identified by a de-identified version of a VIN, to a neutral server 30 in the system illustrated in FIG. 1.

The VM server 20 acquires EDR data to be transferred to the neutral server 30 from the [EDR_DATA] table 241 of the fourth database 240 and acquires a VIN related to the EDR data from the [VII] table 231 of the third database 230 (S510).

The VM server 20 parses the VIN to extract a production serial number (S512).

The VM server 20 acquires an ID of a user who owns a vehicle corresponding to the VIN from the [USER] table 211 of the first database 210 and acquires a salt corresponding to the user ID from the [SALT] table 221 of the second database 220 (S514).

The VM server 20 generates a hash value by applying a predefined hash function to the concatenation of the salt and the production serial number (S516).

The VM server 20 generates a de-identified version of the VIN by replacing the serial number of the VIN with the generated hash value (S518). In other words, the de-identified version of the VIN has a masked production serial number.

Such a de-identification method can effectively weaken a dictionary attack, a rainbow attack, etc. on a production serial number. Also, a salt is not secret information and thus does not violate the general key usage security requirement of "one key should not be used for multiple applications."

The VM server 20 transmits EDR data (i.e., anonymized event data), which is identified by the de-identified version of the VIN, to the neutral server 30.

FIG. 6 shows an exemplary version of event data transmitted to a neutral server. According to the invention, in a de-identified version of a VIN, digits other than a production serial number are plain text and thus allow meaningful statistical analysis on EDR data. For example, it is possible to analyze event data generated from vehicles of "2018 Avante model produced in North America."

Meanwhile, in the case of a model with a very small production number, a vehicle or an owner related to information, such as the model, a series, and a vehicle model year, may be tracked. Accordingly, in the case of such a model, a process similar to the de-identification process performed on a production serial number may be performed on at least some of the tenth to seventeenth digits of a VIN, which correspond to a VIS, and the fourth to eighth digits of the VIN, which correspond to a VDS.

Also, when a vehicle registration number (license plate information), a unique identifier used for communication by the communication device15, or the like is used as VII (PII), a process similar to the de-identification process performed on a production serial number of a VIN may be performed on at least a part of the vehicle registration number, the unique identifier, or the like.

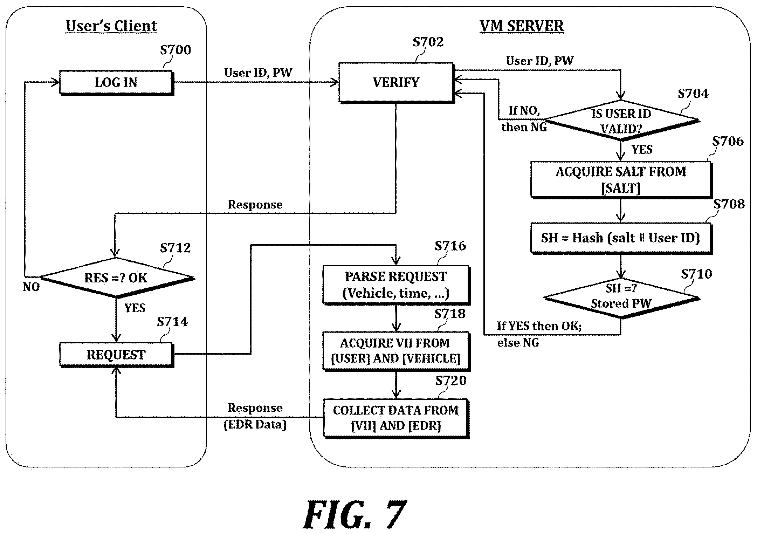

FIG. 7 is an exemplary control flowchart of a process in which a vehicle owner acquires event data generated from his or her vehicle in the system illustrated in FIG. 1.

The vehicle owner submits a user ID and a password to the VM server 20 to log therein using the client computing device 40A (S700).

The VM server 20 performs authentication on the client computing device 40A on the basis of the user ID and the password (S702). In the authentication procedure, the VM server 20 determines whether the user ID is valid (S704). When the user ID is valid, the VM server 20 acquires a salt corresponding to the user ID from the [SALT] table 221 of the second database 220 (S706). The VM server 20 concatenates the salt and the password and generates a first hash value by applying a predefined hash function to the concatenation (S708). Then, the VM server 20 compares the first hash value with a pre-stored password (a second hash value) corresponding to the user ID and outputs an authentication result on the basis of the comparison (S710). In other words, when the first hash value equals the second hash value, login is allowed. The VM server 20 generates log data and provides a response to a login request to the client computing device 40A (S712).

The client computing device 40A which succeeds in logging in specifies information on a vehicle of interest, information on a time at which an event occurred, etc. and transmits a request message for requesting event data to the VM server 20 (S712 and S714).

In response to receiving the request message, the VM server 20 acquires VII related to the request from the [USER] table211 and/or the [VEHICLE] table 213 of the first database 210 (S716 and S718).

The VM server 20 acquires a first link related to the VII from the [VII] table 231 of the third database 230 and acquires event data corresponding to the first link from the [EDR_DATA] table 241 of the fourth database 240 (S720). The VM server 20 transmits the event data to the client computing device 40A.

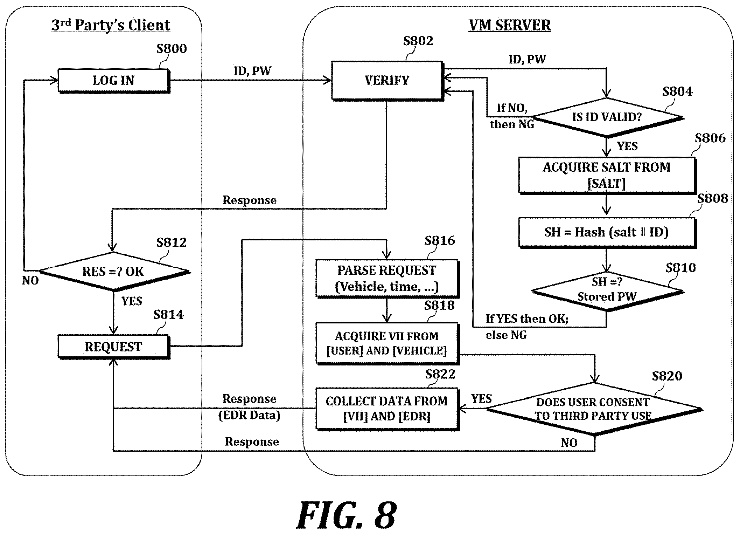

FIG. 8 is an exemplary control flowchart of a process in which a third party acquires event data generated from a specific vehicle that the third party is interested in in the system illustrated in FIG. 1.

For example, a third party may request vehicle-generated data related to a specific driver and/or a specific vehicle from the VM server 20. The VM server 20 should provide event data to the third party only by an owner's consent unless the third party has access rights under a court order, a search warrant, and/or other applicable laws and regulations.

The control flowchart illustrated in FIG. 8 is substantially the same as the control flowchart illustrated in FIG. 7 except that the control flowchart of FIG. 8 further includes a step S820 of checking whether the owner consents to provide the event data to a third party.

The client computing device 40B used by the third party submits an ID and a password thereof to the VM server 20 to log therein (S700).

The VM server 20 performs authentication on the client computing device 40B on the basis of the ID and the password (S802). An authentication procedure S804 to S810 is substantially the same as the flowchart of FIG. 7.

The client computing device 40B which succeeds in logging in specifies information on a vehicle of interest, information on a time at which an event occurred, etc. and transmits a request message for requesting event data to the VM server 20 (S812 and S814).

In response to receiving the request message, the VM server 20 acquires VII of the requested vehicle from the [VEHICLE] table 213 of the first database 210 and acquires a profile of an owner of the vehicle from the [USER] table 211 of the first database 210 (S816 and S818).

The VM server 20 checks whether it is allowed to provide event data requested on the basis of the profile of the owner to the third party (S820).

When it is allowed to provide the event data to the third party ("YES" in S820), the VM server 20 acquires a first link related to the VII from the [VII] table 231 of the third database 230 and acquires event data corresponding to the first link from the [EDR] table 241 of the fourth database 240 (S822). The VM server 20 transmits the event data to the client computing device 40B.

FIGS. 7 and 8 illustrate methods in which the VM server 20 provides event data held therein. As described above, in some embodiments, the VM server 20 may remove event data provided to the neutral server 30 from the databases 231 and 241 thereof. In this case, the VM server 20 may acquire event data related to a specific vehicle from the neutral server 30 which holds anonymized event data.

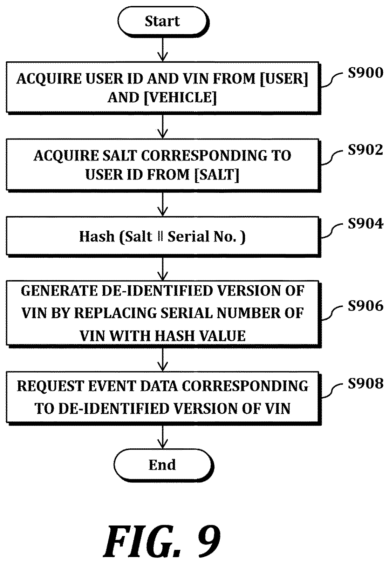

FIG. 9 is a flowchart of a process in which the VM server 20 acquires event data related to a specific vehicle from the neutral server 30 holding anonymized event data in the system illustrated in FIG. 1.

The VM server 20 acquires a user ID and a VIN related to an individual or vehicle of interest by querying the [USER] table 211 and the [VEHICLE] table 213 of the first database 210 (S900). Also, the VM server 20 acquires a salt corresponding to the user ID from the [SALT] table 221 of the second database 220 (S902).

The VM server 20 generates a hash value by applying a predefined hash function to the concatenation of a production serial number, which constitutes a part of the VIN, and the salt (S904) and reconstructs a de-identified version of the VIN by replacing the production serial number of the VIN with the generated hash value (S906).

The VM server 20 requests event data corresponding to the de-identified version of the VIN from the neutral server 30 (S908).

The neutral server 30 acquires event data corresponding to the de-identified version of the VIN by querying a database in which anonymized event data is stored and provides the event data to the VM server 20.

It should be understood that the above-described exemplary embodiments can be implemented in many different ways. In some examples, various devices described in the present disclosure may be implemented as an application specific integrated circuit (ASIC), digital signal processing (DSP), a programmable logic device (PLD), a field programmable gate array (FPGA), a processor, a controller, a microprocessor, another electronic unit, or a combination thereof. In some examples, various methods, servers, and (sub) systems described in the present disclosure may be implemented by at least one general-use computer which has a processor, a memory, a disk or another mass storage, a communication interface, input/output (I/O) devices, and other peripheral devices. The general-use computer may function as a device, a server, a system, etc. which perform the above-described methods by loading software instructions into the processor and then executing the instructions to perform functions described in the present disclosure.

Meanwhile, various methods or functions described in the present disclosure may be implemented with instructions stored in a non-transitory recording medium which may be read and executed by one or more processors. The non-transitory recording medium includes, for example, all types of recording devices in which data is stored in a form readable by a computer system. For example, the non-transitory recording medium includes storage media such as an erasable and programmable read only memory (EPROM), an electrically erasable and programmable read-only memory (EEPROM), a flash drive, an optical drive, a magnetic hard drive, and a solid state drive (SSD).

### CROSS-REFERENCE TO RELATED APPLICATIONS

The present this application is a national phase application of PCT/KR2020/000173, filed January 6, 2020, which is based on, and claims priority from, Korean Patent Application Number 10-2019-0002897, filed January 9, 2019, and Korean Patent Application Number 10-2020-0001209, filed January 6, 2020.

## Claims

1. A method performed by a server (20) of a vehicle manufacturer, the method comprising:
receiving vehicle-generated data identified by a vehicle identification number (VIN) from a vehicle (10);
generating a de-identified version of the VIN; and
providing the de-identified version of the VIN and the vehicle-generated data to a data server (30) independent of the server (20) of the vehicle manufacturer,
wherein generating the de-identified version of the VIN comprises:
generating a hash value by applying a hash function to a concatenation of some digits of the VIN and a salt, the some digits including at least a production serial number; and
replacing the some digits of the VIN with the hash value and keeping digits other than the production serial number as plain text.

2. The method of claim 1, wherein the vehicle-generated data includes data recorded by an event data recorder (EDR) (11) equipped in the vehicle (10).

3. The method of claim 1, wherein the vehicle-generated data includes autonomous driving data recorded by a data storage system equipped in the vehicle (10).

4. A method in which a vehicle manufacturer server (20) acquires vehicle-generated data related to a specific vehicle from a data server (30) holding anonymized vehicle-generated data, the method comprising:
acquiring a vehicle identification number (VIN) of the specific vehicle;
reconstructing a de-identified version of the VIN; and
requesting vehicle-generated data corresponding to the reconstructed de-identified version from the data server (30), wherein reconstructing the de-identified version of the VIN comprises:
generating a hash value by applying a hash function to a concatenation of some digits of the VIN and a salt, the some digits including at least a production serial number; and
replacing the some digits of the VIN with the hash value and keeping digits other than the production serial number as plain text.

5. The method of claim 4, wherein the vehicle-generated data includes data recorded by an event data recorder (EDR) (11) equipped in the vehicle (10).

6. The method of claim 4, wherein the vehicle-generated data includes autonomous driving data recorded by a data storage system equipped in the vehicle (10).

7. A data server (30) for holding anonymized vehicle-generated data, the data server (30) comprising:
at least one processor; and
at least one data storage,
wherein the at least one data storage stores a database configured to store pieces of vehicle-generated data, which are distinguished from each other by de-identified versions of vehicle identification numbers (VINs), and instructions, and
when the instructions are executed by the at least one processor, the instructions cause the data server to perform steps of:
receiving a request message, which requests vehicle-generated data corresponding to the de-identified version of the VIN of interest, from a vehicle manufacturer server (20);
acquiring the vehicle-generated data corresponding to the de-identified version of the VIN of interest by querying the database; and
transmitting the acquired vehicle-generated data to the vehicle manufacturer server (20),
wherein the de-identified version of the VIN is generated by:
generating a hash value by applying a hash function to a concatenation of some digits of the VIN and a salt, the some digits including at least a production serial number; and
replacing the some digits of the VIN with the hash value and keeping digits other than the production serial number as plain text.

## Patentansprüche

1. Verfahren, das von einem Server (20) eines Fahrzeugherstellers durchgeführt wird, wobei das Verfahren umfasst:
Empfangen von Daten, die von einem Fahrzeug erzeugt werden, das durch eine Fahrzeugidentifikationsnummer (VIN) identifiziert wird, von einem Fahrzeug (10);
Erzeugen einer anonymisierten Version der VIN; und
Bereitstellen der anonymisierten Version der VIN und der vom Fahrzeug erzeugten Daten an einen vom Server (20) des Fahrzeugherstellers unabhängigen Datenserver (30);
wobei das Erzeugen einer anonymisierten Version der VIN umfasst:
Erzeugen eines Hash-Werts durch Anwenden einer Hash-Funktion auf eine Verkettung einiger Ziffern der VIN und eines Salts, wobei die einigen Ziffern mindestens eine Herstellungsseriennummer einschließen; und
Ersetzen der einigen Ziffern der VIN durch den Hash-Wert und Beibehalten von Ziffern außer der Herstellungsseriennummer als Klartext.

2. Verfahren nach Anspruch 1, wobei die vom Fahrzeug erzeugten Daten Daten einschließen, die von einem im Fahrzeug (10) eingebauten Ereignisdatenaufzeichner (EDR) (11) aufgezeichnet wurden.

3. Verfahren nach Anspruch 1, wobei die vom Fahrzeug erzeugten Daten Daten über autonomes Fahren einschließen, die von einem im Fahrzeug (10) eingebauten Datenspeichersystem aufgezeichnet wurden.

4. Verfahren, bei dem ein Fahrzeugherstellerserver (20) Daten, die von einem Fahrzeug erzeugt werden, bezüglich eines spezifischen Fahrzeugs von einem Datenserver (30) erfasst, der anonymisierte, vom Fahrzeug erzeugte Daten hält, wobei das Verfahren umfasst:
Erfassen einer Fahrzeugidentifikationsnummer (VIN) des spezifischen Fahrzeugs;
Rekonstruieren einer anonymisierten Version der VIN; und
Anfordern der vom Fahrzeug erzeugten Daten, die der rekonstruierten anonymisierten Version entsprechen, vom Datenserver (30), wobei das Rekonstruieren der anonymisierten Version der VIN umfasst:
Erzeugen eines Hash-Werts durch Anwenden einer Hash-Funktion auf eine Verkettung einiger Ziffern der VIN und eines Salts, wobei die einigen Ziffern mindestens eine Herstellungsseriennummer einschließen; und
Ersetzen der einigen Ziffern der VIN durch den Hash-Wert und Beibehalten von Ziffern außer der Herstellungsseriennummer als Klartext.

5. Verfahren nach Anspruch 4, wobei die vom Fahrzeug erzeugten Daten Daten einschließen, die von einem im Fahrzeug (10) eingebauten Ereignisdatenaufzeichner (EDR) (11) aufgezeichnet wurden.

6. Verfahren nach Anspruch 4, wobei die vom Fahrzeug erzeugten Daten Daten über autonomes Fahren einschließen, die von einem im Fahrzeug (10) eingebauten Datenspeichersystem aufgezeichnet wurden.

7. Datenserver (30) zum Halten von anonymisierten, von einem Fahrzeug erzeugten Daten, wobei der Datenserver (30) umfasst:
mindestens einen Prozessor; und
mindestens einen Datenspeicher;
wobei der mindestens eine Datenspeicher eine Datenbank speichert, die ausgebildet ist, um Teile von vom Fahrzeug erzeugte Daten, die durch anonymisierte Versionen von Fahrzeugidentifikationsnummern (VINs) voneinander unterschieden werden, und Anweisungen zu speichern, und
wenn die Anweisungen von dem mindestens einen Prozessor ausgeführt werden, die Anweisungen veranlassen, dass der Datenserver Schritte durchführt zum:
Empfangen einer Anforderungsachricht, die vom Fahrzeug erzeugte Daten anfordert, die der anonymisierten Version der interessierenden VIN entsprechen, von einem Fahrzeugherstellerserver (20);
Erfassen der vom Fahrzeug erzeugten Daten, die der anonymisierten Version der interessierenden VIN entsprechen, durch Abfragen der Datenbank; und
Übertragen der erfassten, vom Fahrzeug erzeugten Daten an den Fahrzeugherstellerserver (20),
wobei die anonymisierte Version der VIN erzeugt wird durch:
Erzeugen eines Hash-Werts durch Anwenden einer Hash-Funktion auf eine Verkettung einiger Ziffern der VIN und eines Salts, wobei die einigen Ziffern mindestens eine Herstellungsseriennummer einschließen; und
Ersetzen der einigen Ziffern der VIN durch den Hash-Wert und Beibehalten von Ziffern außer der Herstellungsseriennummer als Klartext.

## Revendications

1. Procédé mis en œuvre par un serveur (20) d'un fabricant de véhicules, le procédé comprenant :
le fait de recevoir des données générées par un véhicule identifiées par un numéro d'identification de véhicule (VIN) provenant d'un véhicule (10) ;
le fait de générer une version dépersonnalisée du VIN ; et
le fait de fournir la version dépersonnalisée du VIN et les données générées par un véhicule à un serveur de données (30) indépendant du serveur (20) du fabricant de véhicules,
dans lequel la génération de la version dépersonnalisée du VIN comprend :
le fait de générer une valeur de hachage en appliquant une fonction de hachage à une concaténation de certains chiffres du VIN et un sel, lesdits certains chiffres incluant au moins un numéro de série de production ; et
le fait de remplacer lesdits certains chiffres du VIN par la valeur de hachage et de conserver des chiffres autres que le numéro de série de production en tant que texte brut.

2. Procédé selon la revendication 1, dans lequel les données générées par un véhicule incluent des données enregistrées par un enregistreur de données d'événements (EDR) (11) équipant le véhicule (10).

3. Procédé selon la revendication 1, dans lequel les données générées par un véhicule incluent des données de conduite autonome enregistrées par un système de stockage de données équipant le véhicule (10).

4. Procédé dans lequel un serveur de fabricant de véhicules (20) acquiert, auprès d'un serveur de données (30) conservant des données anonymisées générées par un véhicule, des données générées par un véhicule associées à un véhicule spécifique, le procédé comprenant :
le fait d'acquérir un numéro d'identification de véhicule (VIN) du véhicule spécifique ;
le fait de reconstituer une version dépersonnalisée du VIN ; et
le fait de demander au serveur de données (30) des données générées par un véhicule correspondant à la version dépersonnalisée reconstituée, dans lequel la reconstitution de la version dépersonnalisée du VIN comprend :
le fait de générer une valeur de hachage en appliquant une fonction de hachage à une concaténation de certains chiffres du VIN et un sel, les certains chiffres incluant au moins un numéro de série de production ; et
le fait de remplacer les certains chiffres du VIN par la valeur de hachage et de conserver des chiffres autres que le numéro de série de production en tant que texte brut.

5. Procédé selon la revendication 4, dans lequel les données générées par un véhicule incluent des données enregistrées par un enregistreur de données d'événements (EDR) (11) équipant le véhicule (10).

6. Procédé selon la revendication 4, dans lequel les données générées par un véhicule incluent des données de conduite autonome enregistrées par un système de stockage de données équipant le véhicule (10).

7. Serveur de données (30) destiné à conserver des données anonymisées générées par un véhicule, le serveur de données (30) comprenant :
au moins un processeur ; et
au moins un système de stockage de données,
dans lequel ledit au moins un stockage de données stocke une base de données configurée pour stocker des éléments de données générées par un véhicule qui se distinguent les uns des autres par des versions dépersonnalisées de numéros d'identification de véhicule (VIN) et des instructions, et,
lorsque les instructions sont exécutées par ledit au moins un processeur, les instructions amènent le serveur de données à mettre en œuvre des étapes consistant à :
recevoir, en provenance d'un serveur de fabricant de véhicules (20), un message de demande qui demande des données générées par un véhicule correspondant à la version dépersonnalisée du VIN d'intérêt ;
acquérir les données générées par un véhicule correspondant à la version dépersonnalisée du VIN d'intérêt en interrogeant la base de données ; et
transmettre au serveur de fabricant de véhicules (20) les données acquises générées par un véhicule,
dans lequel la version dépersonnalisée du VIN est générée par :
le fait de générer une valeur de hachage en appliquant une fonction de hachage à une concaténation de certains chiffres du VIN et un sel, lesdits certains chiffres incluant au moins un numéro de série de production ; et
le fait de remplacer lesdits certains chiffres du VIN par la valeur de hachage et de conserver des chiffres autres que le numéro de série de production en tant que texte brut.
